(19) **Europäisches Patentamt**
**European Patent Office**
**Office européen des brevets**

(11) **EP 2 184 826 A1**

(12) **EUROPEAN PATENT APPLICATION**

(43) Date of publication:
**12.05.2010 Bulletin 2010/19**

(51) Int Cl.:
**H02G 13/00** *(2006.01)*

(21) Application number: **08168766.7**

(22) Date of filing: **10.11.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventor: **van den Heuvel, Johannes Cornelis**<br>**2652 GC Berkel en Rodenrijs (NL)** |
| | (74) Representative: **Hatzmann, Martin et al**<br>**Vereenigde**<br>**Johan de Wittlaan 7**<br>**2517 JR Den Haag (NL)** |
| (71) Applicant: **Nederlandse Organisatie voor Toegepast-Natuurwetenschappelijk Onderzoek TNO**<br>**2628 VK The Hague (NL)** | |

(54) **Laser based lightning protection method and system**

(57) It is proposed to realize lightning protection by means of a train of femtosecond laser pulses, with a pulse frequency of at least 0.5 MHz and a train duration of at least 100 microseconds. The pulses are amplified to an energy exceeding a threshold energy for generating a plasma filament in atmospheric air. The amplified pulses are transmitted into the atmosphere in the presence of a thundercloud, upon detection that conditions for a thunderstroke have arisen in the atmosphere.

EP 2 184 826 A1

**Description**

Field of the invention

The invention relates to protection against lightning and in particular to a method of guiding lightning through the atmosphere by means of laser pulses, for example to draw lightning to a lightning conductor.

Background

The idea of lightning protection by means of lasers has been pursued for over thirty years. Known protection methods rely on the creation of a conducting plasma channel in the air, as a kind of extended lightning rod. High power long laser pulses, for instance $CO_2$ lasers, have been tried for this purpose, but it has been found that the plasma channel becomes opaque to the laser radiation, which limits the length of the channels that can be realized.

Femtosecond pulses can be used to create plasma filaments through the atmosphere. The sharp rise and fall of the electromagnetic field in femtosecond pulses have effects that differ significantly from the effects that occur in response to longer pulses of several picoseconds or nanoseconds and continuous waves. The femtosecond laser pulse leads to plasma filament formation, due to a dynamical balance between diffraction, the focusing Kerr effect and the defocusing multiphoton ionization. A relatively long filament can be produced in this way.

An extensive review on femtosecond filamentation in transparent media has been published recently by A. Couairon et al., in an article titled "Femtosecond filamentation in transparent media", Physics Reports 441, 47-189 (2007).. The review concerns filamentation in media which become weakly ionized by the propagating pulse with a typical peak intensity of $10^{13}$ W/cm$^2$. It was believed for a long time that intense ultrashort pulses are not suited for long range propagation in air. Reasons for this are beam diffraction and group velocity dispersion. Experiments, however, have shown the contrary: a beam generated by an intense infrared femtosecond pulse remains focused for tens of meters. This type of propagation has been called self-guiding or filamentation.

A demonstration of the ability to trigger and guide high-voltage discharges with ionized filaments generated by femtosecond terawatt pulses is reported by M. Rodriguez et al., Triggering and guiding of megavolt discharges using laser-induced ionized filaments, Optics Letters 27, 772-774 (2002). Filamentation, with the dynamical equilibrium between Kerr self-focusing and plasma induced diffraction is crucial. The authors see a real possibility of triggering and guiding lightning with the Teramobile system

US patent No 5,175,664 describes a femtosecond laser pulse based method to create a discharge channel through the atmosphere as a lightning guide. The rise and fall of the electromagnetic field in femtosecond pulses have effects that differ significantly from the effect of continuous wave pulses. The femtosecond laser pulse leads to plasma filament formation, due to a dynamical balance between diffraction, the focusing Kerr effect and the defocusing multiphoton ionization. A relatively long filament can be produced in this way.

However, as noted in US 5,175,664, such a filament by itself is insufficient to guide lightning. The UV laser pulse creates an ionized filament, but this filament has insufficient conductivity because freed electrons subsequently attach to oxygen, resulting in oxygen ions that have low mobility. US 5,175,664 uses an accompanying high power longer wavelength pulse to detach the electrons from the oxygen ions, in order to create a channel with sufficient conductivity. This type of conductive channel is not persistent. US 5,175,664 repeats the pulses with a repetition rate of 1-100 pulses per second, which may be sufficient to promote that all successful lighting leader strokes (streamers) near the laser source are guided by the laser pulses.

US patent no 6,072,684 describes the possibility to trigger the laser pulse by means of detection of imminent lightning, for example from an increase in the electric field near the ground. When imminent lightning is detected an XeCl excimer type laser with sufficient pulse power to create a conductive channel is triggered. In this case the high power short pulses last for a time of the order of 20 ns.

US 5,175,664 uses a combination of a simultaneous femtosecond short wavelength pulse and a long wavelength pulse of longer duration. Simultaneous pulses are ensured by pumping with energy from the high wavelength pulse. A train of low wavelength pulses is generated. Where the high wavelength pulse overlaps a low wavelength pulse from this train the energy of the low wavelength pulse is pumped up. The high wavelength pulses are repeated with a frequency of 1-100 Hertz, to generate successive combinations of simultaneous pulses.

This technique still has the problem that the length of the conductive channel that can be realized through the atmosphere is quite limited. The excitation of a high density plasma of ions with the low wavelength pulse makes the atmosphere in the channel intransparent for light with the wavelength of the pulses, limiting the channel length over which sufficient conduction can be realized. Moreover, the useful length is limited by the distance that a lightning leader (streamer) can travel before the channel is extinguished. A conservative estimate of the plasma lifetime is one microsecond. Although this is more than six orders of magnitude longer than the duration of the femtosecond laser pulse, it may be insufficient to guide a leader stroke. Leaders have a speed of about 1000 km/sec. With the given leader speed and the lifetime of the channel, the leader can only propagate 10 meter along the channel before it dies out. With such parameters, laser lightning control is ineffective.

A step towards real-scale lightning control with femtosecond laser pulses is described by G. Mejean, et al., in an article titled Improved laser triggering and guiding of megavolt discharges with dual fs-ns pulses, Applied Physics Letters 88, 021101 (2006). The triggering and guiding of megavolt discharges is improved by the use of dual fs-ns pulses. The fs-pulse induces the filaments and the conducting cold plasma channel. The second ns-pulse photodetaches electrons from negatively charged oxygen ions. The resulting electrons allow Joule heating and better ohmic bridging, resulting in 5% reduction of the breakdown voltage.

Controlled discharges over a gap of 1.2 m filled with a dense water cloud is demonstrated by R. Ackermann et al., "Triggering and guiding of megavolt discharges by laser-induced filaments under rain conditions", Applied Physics Letters 85, 5781-5783 (2004).. The cloud reduces the discharge probability only by 30%. The self-guided filaments are transmitted through the cloud and ionize molecules, thereby creating a plasma channel. This result is favorable for lightning control.

A clear and topical review on filaments of light is presented by J. Kasparian, Filaments of Light, American Scientist 94, 150 (2006). The following results are emphasized: propagation of filaments through clouds, vertical propagation over long distance. The control of lightning is discussed as well. It is recalled that filaments can trigger and guide electric discharges over a distance of 4 meter. The breakdown voltage is reduced by 30%. Rain does not prevent this. Ongoing research tries to extend the plasma lifetime in order to increase the guiding length. Actual control, however, is still science fiction although, due to recent progress, closer to reality than three decades ago when the idea was brought up.

In the past many problems and potential problems have been addressed and solved. The generated plasma channel by femtosecond lasers is conductive enough for laser guidance while not too dense to stop the light from propagating. Reports show that the propagation in adverse weather is sufficient (lightning often occurs in thunderstorms). Finally, the protection of the laser against lightning strikes has been solved by shielding the laser with metal structures.

However, laser lightning protection has remained elusive due to the limited lifetime of the generated conductive channel.

Summary

Among others, it is an object to provide for a method to create a conductive channel through the atmosphere that has a greater useful length.

A method according to claim 1 is provided. Herein a train of femtosecond laser pulses is used to create a series of temporally successive plasma filaments in the atmosphere. The pulses have a repetition frequency of at least 0.5 MHz and the train of femtosecond pulses lasts at least 100 microseconds, so that the series contains at least fifty pulses. The energy level of each pulse is set at least to the critical level for creating a filament. The series of filaments ensures that filaments are present on a near continuous basis during at least 100 microseconds. The filaments are created along substantially the same path through the atmosphere without redirecting the beam, although of course minor erratic position deviations may occur due to random aspects in the dynamics filament formation. Although the individual filaments themselves are generally not expected to have sufficient conductivity to create a conduction channel suitable for a lightning leader stroke, their near continuous presence serves to guide the development of the leader stroke.

No further pulses, such as higher wavelength pulses during the train to detach electrons from oxygen, or significant number of pulses outside the train need be used.

In an embodiment a lightning condition sensor is used to trigger the train of pulses. Lightning condition sensors are known per se. They detect whether a condition has developed wherein a lightning stroke is imminent for example from a rise in the electric field strength in the atmosphere. By triggering a pulse train of limited length with the light condition sensor, the power needed for the generation of the pulse train is kept to an acceptable level.

A pulse train generation system for this purpose may comprise a pulsed laser source and a laser amplifier applied to pulses from the pulsed laser source. In further embodiments, a light switch may be used to reduce the pulse repetition rate of pulse that are fed to the amplifier. This reduces the amount of power. In the further embodiments, a variable attenuator may be used to increase the pulse energy of pulses that are fed to the amplifier as a function of position of the pulses in the train. This also reduces the amount of power needed to create a train of pulses with sufficient energy to create filaments.

Brief description of the drawing

These and other objects and advantageous aspects will become apparent from a description of exemplary embodiments using the following figures.

Figure 1     shows a lightning protection system.

Figure 2    shows a pulse train laser source

Detailed description of exemplary embodiments

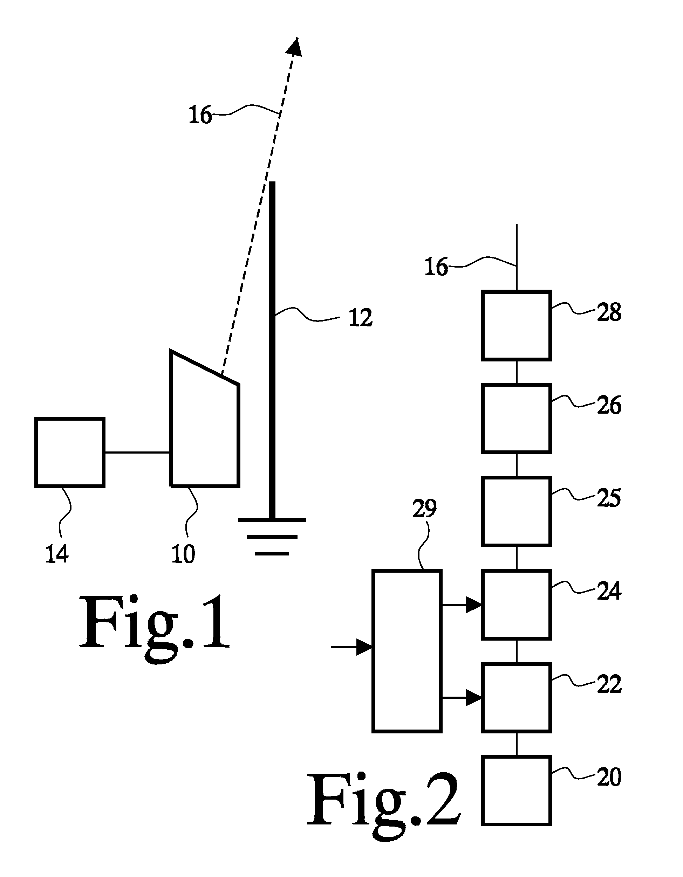

Figure 1 shows a lightning protection system, comprising a high power pulse train laser source 10, a lightning conductor 12 and a lighting condition sensor 14. The output of pulse train laser source 10 is located adjacent lightning conductor 12 and directed to generate an upward beam 16 that passes near the tip of lightning conductor 12. Other configurations may be used, for example with a mirror to reflect the beam 16 upward along lightning conductor 12, or with a configuration wherein lightning conductor 12 is part of the housing of laser source 10, or wherein lightning conductor 12 is hollow, beam 16 being passed through its interior

Lightning condition sensor 14 has an output coupled to a trigger input of pulse train laser source 10. Lightning condition sensor 14 serves to detect time points of imminent possible lightning. Lightning condition sensors are known per se. US 6,072,684 provides an example using an electric field strength sensor. A trigger signal may be generated when the sensed electrical field strength in the atmosphere exceeds a predetermined critical strength. Since lightning is imminent when the electric field reaches a critical strength, lightning sensor 14 may measure the electric field at the top of a structure that should be protected, or at some distance from conductor 12. When the electric field reaches a predetermined level, a train of laser pulses is triggered to generate successive filaments.

Conventional lightning control techniques aim to generate a kind of extended lightning rod. For this purpose a highly conducting plasma channel must be realized through the atmosphere by means of the laser beam. As in a solid lightning rod the electric potential in this channel equalizes to ground potential. This results in a high field strength at the sharp top of the channel, which allows a lightning leader stroke (streamer) to break through a part of the atmosphere at the top of the channel where the field is high, using the plasma channel to supply charge in the breakthrough. This conventional process is self-maintaining: the advance of the streamer extends the channel, equalizing the potential in the extended channel, which in turn leads to a high electric field at the raised top further up in the atmosphere, which leads to further breakthrough and so on.

In contrast to conventional lightning control techniques, the laser pulse train of the present technique is only used to create successive filaments, which are commonly considered to be insufficiently conductive to act as conductive channels to provide an "extended lightning rod" for creating a streamer at its top. Instead, a temporal succession of filaments is provided to allow the streamer to develop along the filaments. The underlying physical mechanism is taken to be that each filament acts as an initialization seed for ionization by the streamer, to guide its path to a place where a later filament acts as a next initialization core further up.

The duration of the train of pulses is selected to allow the streamer to develop over a significant distance that ensures that the streamer may become self-maintaining, at the expense of nearby spontaneous streamers. The streamer develops with a speed of about 1000 km/s. The filaments will define a path along which the developing streamer arises. As series of filaments during at least 100 microseconds allow the streamer to develop over a distance of at least 100 meters, which may be sufficient. A longer duration, of 1 millisecond or even higher, say up to five millisecond may be used. This provides for longer guided streamer development and/or more margin for the start time of the streamer. But a very long pulse train is not needed and it is preferably avoided to save power.

The laser pulse frequency, which defines the time between successive filaments, is kept so high that the developing streamer cannot wander from this path. It is known that filaments created by femtosecond lasers have a lifetime of about 1 microsecond, so a pulse frequency of 1 MHz suffices. A slightly lower pulse frequency, for example at least 0.5 MHz may also suffice, because in this case the streamer does not wander too much in the time that no filament is present.

Multiple pulses are used to start successive filaments. This can be done before the previous filament is certain to have disappeared. Herein use is made of the fact that the filament is transparent to the laser light. Thus, the new filament can be formed without being disturbed by the previous filament. Hence higher pulse frequencies may be used.

To realize a filament, the pulse power has to be at least equal to the critical power for filamentation given by

$$P_c = \frac{3.77\lambda^2}{8\pi n_2\, n_0},$$

where λ is the wavelength of the laser pulse, and $n_0$ and $n_2$ are the linear and non-linear refractive indices of air. It has been reported that the critical power is between 3 and 5 GW for a wavelength of 800 nm. Now, if we use a pulse with a duration of 100 fs and multiply it by the critical power of 3 GW, we obtain a required minimum pulse energy of 0.3 mJ. An arbitrarily higher pulse energy than the critical may be used, but this is not necessary as it will lead only to more simultaneous filaments, where one filament at a time is sufficient. In order to minimize power consumption the pulse energy is preferably limited to within a range above the critical pulse energy, e.g. in a range between the critical pulse energy and twice the critical pulse energy.

However, even the critical pulse energy would result in an average laser power 300 W at a pulse repetition frequency of 1 MHz (0.3 mJ times 1 MHz). For a fs laser this is enormous, in comparison, the largest fs laser, TERAMOBILE, yields an average power of 3.5 W, i.e. 350 mJ at 10 Hz. In order to keep the average power down, a burst of fs laser pulses is used with a time interval of at most 1 millisecond. This burst must be triggered by lightning condition sensor 14. Use of lighting conditions sensors is known per se. Since lightning is imminent when the electric field reaches a critical strength, the lightning condition sensor may comprise an electrical field strength sensor configured to measure the electric field at the top of a structure that should be protected. When the electric field reaches a preset level, the laser burst is triggered.

Since the lightning streamer travels at around 1000 km/s, the burst of laser pulses should have sufficient duration for the streamer to travel sufficient distance to prevent other successful streamer. In general, a length of at most 1 km will be sufficient for the length of the streamer. This means that no more than a burst duration of 1 millisecond is needed. A millisecond burst with an average power of 300 W amounts to a burst energy of 300 mJ. This energy compares favorable with the TERAMOBILE single pulse of 350 mJ stated above. This means that such a pulse is energetically possible from current laser rods.

### Table 1  Some commercially available femtosecond lasers

| Model | Wavelength | Pulse energy | Rep Rate | Pulse Length | Power |
|---|---|---|---|---|---|
| MLFL-P | 1530-1565 nm | 200 pJ | 50 MHz | 0.5-1.5 ps | 0.01 W |
| Femtolite Ultra AX-20 | 780 nm | 400 pJ | 50 MHz | 100 fs | 0.02 W |
| Femtolite Ultra BX-60 | 1560 nm | 1.2 nJ | 50 MHz | 100 fs | 0.06 W |
| Femtolite F-100 | 800 nm | 1.3 nJ | 75 MHz | 150 fs | 0.1 W |
| Vitesse 800 | 800 nm | 3 nJ – 8 nJ | 80 MHz | <100 fs | 0.8 W |
| Femtolas-1030 | 1030 nm | 1-100 nJ | 10-100 MHz | 100 fs | 1 W |
| Picopower-1067 | 1067 nm | 1-100 nJ | 10-1000 MHz | 1-5 ps | 1 W |
| | | | | | |
| FCPA µJewel D-400 | 1045 nm | 0.002 mJ | 200 kHz | 500 fs | 0.4 W |
| FCPA µJewel D-100 | 1045 nm | 0.01 mJ | 100 kHz | 700 fs | 1 W |
| BRIGHT | 800 nm | 1.5 mJ | 5000 Hz | 120 fs | 7.5 W |
| FEMTOCUBE | 800 nm | 2.5 mJ | 0.5-10 kHz | 30 fs | 2.5 W |
| ALPHA | 800 nm | 60 mJ | 0.1-10 kHz | 30 fs | 6 W |
| Teramobile | 800 nm | 350 mJ | 10 Hz | 70-600 fs | 3.5 W |

Table 1 shows a selection of currently available femtosecond laser systems. Clearly the systems can be divided in low pulse power high repetition rate lasers and high pulse power low rep-rate lasers.

We will now present an embodiment of high power pulse train laser source 10 for use in laser lightning control using currently available components. The performance parameters of this embodiment are listed in Table 2.

Table 2 Requirements of the new laser concept for lightning control.

| Laser parameter | Value |
|---|---|
| Pulse length | around 100 fs |
| Pulse energy | > 0.3 mJ |
| Pulse rep-rate in burst | 1 MHz |
| Burst duration | 1 ms |

A higher pulse energy may be used, but this results in multiple filament, not in increased lifetime of the filaments. One filament is sufficient to maintain a sufficient field in the atmosphere. Therefore, a higher pulse energy is not needed.

Figure 2 shows the layout of high power pulse train laser source 10, comprising an oscillator 20, a light switch 22, a variable light attenuator 24, a stretcher 25, an amplifier 26 and a compressor 28, coupled in cascade in a light path from oscillator 20 to the output of compressor 28. Furthermore, high power pulse train laser source 10 comprises a control circuit 29, with a trigger input and control outputs coupled control inputs of light switch 22 and variable light attenuator 24.

Oscillator 20 may be a standard 800 nm laser oscillator that produces femtosecond pulses with a pulse repetition rate of at least 1 MHz. As used herein, femtosecond pulses are pulses with a duration of less than 1000 femtosecond and at least 1 femtosecond. Typically oscillator 20 is implemented as a laser configuration that alternately assumes conditions where laser light generation occurs and conditions where no laser light generation occurs, under the influence of pumping and power loss due to laser light emission respectively. The resulting pulses have a wavelength spread. Oscillator 20 may contain one or more dispersive elements that delay the different wavelength components of the pulses dependent on their wavelength, so that the pulse duration is shortened. Each dispersive element may comprise a transparent body made of a dispersive substance. This type of oscillator is known per se.

Light switch 22 may be implemented as an electronically controlled light switch. Variable light attenuator 24 may be implemented as an electronically controlled attenuator. Such light switches and attenuators are known per se. Basically, the light switch 22 and the attenuator 24 may be of the same design, the switch being driven by binary on/off control and the attenuator being driven by an analog signal. In an embodiment the function light switch 22 and the attenuator 24 may be combined in one device, by using variable attenuation during switch on and 100 percent attenuation otherwise.

Stretcher 25 and compressor 28 may comprise transparent bodies of dispersive material through which the light path passes. Their function is to delay the different wavelength components of the pulses dependent on their wavelength, so that the pulse duration is widened and shortened in stretcher 25 and compressor 28 respectively.

Amplifier 26 may be implemented as a pump based amplifier, comprising for example a rod and a number of pump lasers to pump energy into the rod.

Control circuit 29 is an electronic circuit configured to generate control signals for light switch 22 and variable light attenuator 24 in response to trigger signals from lightning condition sensor 14 (not shown). Control circuit 29 defines a time window of 1 millisecond following a trigger signals from lightning condition sensor 14. It may comprise a pulse generator that generates a series of electronic pulses at a rate of 1 MHz and a length corresponding to a pulse interval between pulses from oscillator 20 during the time window, the electronic pulses being applied to a control input of light switch 22. Furthermore, control circuit 29 may comprise a ramp signal generator with an output coupled to variable light attenuator 24 configured to provide for decreasing attenuation as a function of time in the window. But other implementations may be used, such as a computer programmed to generate the electronic pulses and/or to program the attenuation signal values as a function of time.

Components known from 800 nm titanium sapphire technology may be used to realize the laser source. However, the concept is not limited to this technology. In particular, shorter wavelengths than 800 nm could be used since a shorter wavelength means that to a lower minimum pulse energy suffices. Longer wavelengths are also possible though the required pulse energy is higher. It is preferred that the wavelength lies in a range of 300-1800 nanometer wherein the atmosphere is light transparent.

In operation light switch 22 selects pulses from oscillator 20 with the purpose of constructing a burst of fs laser pulses with a repetition-rate of 1 MHz and a duration of 1 millisecond. It will be appreciated that these values serve as examples. The burst duration may be between 0.1 millisecond and 1 millisecond for example and the repetition rate may be 0.5 MHz or higher. The pulse repetition rate and the burst duration may also be larger than 1 MHz and 1 ms, respectively. However, this will increase the output power of the laser. Light switch 22 is used because the pulse repetition rate of pulses from oscillator 20 is higher than necessary. Light switch 22 reduces the pulse rate. Optionally, if the pulse repetition rate of pulses from oscillator 20 is sufficiently low, the pulse frequency reduction of light switch 22 may be omitted In this case light switch 22 may be switched on and off at the start and end of a burst of for example 1 millisecond. Light switch 22 may even be omitted if oscillator 20 can be selectively deactivated outside such a burst.

Variable light attenuator 24 passes pulses with a time variable attenuation so as to keep the pulse energy of different pulses at the output of amplifier 26 substantially constant during the train of pulses. A minimum critical output pulse energy must be maintained to create filaments. While energy is extracted from amplifier 26 for the amplification of successive pulses, the gain of amplifier 26 diminishes. This may mean that output pulses early in the burst have excess power.

The controlled attenuation of variable light attenuator compensates for this by increasing the pulse energies at the input of amplifier 26 as a function of time. A predetermined attenuation time dependence may be used when the diminution of the amplification is known. Alternatively, a feedback loop may be used with an intensity sensor coupled to control circuit 29, arranged to measure intensity following the output of amplifier 26, the control circuit regulating the attenuation to keep the intensity substantially constant as a function of time. Although a preferred embodiment has been described wherein the pulse energy is kept constant by varying the attenuation, it will be appreciated that excess pulse energy can be realized by the time dependent attenuation even if the output pulse energy is not kept constant in time. Variable light attenuator 24 may even be omitted if the excess power can be accepted.

Stretcher 25 and compressor 28 serve to reduce the sharpness of the pulses that have to be amplified by amplifier 26, while reconstructing sharp pulses. Note that the sequence of the units before the amplifier can be changed.

Stretcher 25 could be placed directly after oscillator 20, or compressing elements in oscillator 20 and stretcher 25 could be omitted. It depends on the particular realization in hardware which order is optimal.

Amplifier 26 and compressor 28 are standard units in high-power fs laser systems. In the TERAMOBILE system the amplifier has an output pulse energy of 5 mJ with an amplification of $10^6$. The amplification is selected so that substantially all of the pulses in the train have at least the critical energy needed to generate filaments. With an output pulse energy of 5 mJ at the wavelength of the TERAMOBILE system both the output pulse energy and required amplification can be met with existing technology. The use of a time window wherein a burst of pulses is generated makes it possible to regenerate the amplifier 26 between the pulses. The time variable attenuation makes it possible to reduce the amount of power that needs to be delivered by the amplifier to provide substantially all of the pulses at sufficient energy. No energy need be lost to excess pulse power in pulses at the start of the pulse train.

By using light switch 22 and variable attenuator 24 to create a high repetition-rate pulse train multiple pulses are provided to provide for filament on a near continuous basis during the burst, without wasting excessive energy on redundant filaments. Note that the fact that the channel is transparent to the laser light means that no interference between different filaments arises if a previous filament still exists when the next filament is generated.

## Claims

1. A lightning protection method, the method comprising

   - generating a train of fem to second laser pulses, with a pulse frequency of at least 0.5 MHz and a train duration of at least 100 microseconds, each pulse having an energy exceeding a threshold energy for generating a plasma filament in atmospheric air;
   - transmitting said train of femtosecond laser pulses into the atmosphere in the presence of a thundercloud.

2. A lightning protection method according to claim 1, comprising detecting whether a condition for development of a lightning stroke has arisen and triggering generation of the train of pulses dependent on said detection.

3. A lightning protection method according to claim 2, comprising

   - providing a pumped light amplifier;
   - pumping up the pumped light amplifier before triggering the generation;
   - amplifying the femtosecond laser pulses of the train by means of the pumped light amplifier after triggering the generation;
   - attenuating an energy of at least part of the laser pulses before they are applied to the pumped light amplifier with a time dependent attenuation rate, which compensates for decrease of an amplifying factor of the pumped light amplifier during amplification of the train of pulses.

4. A lightning protection method according to claim 1 wherein the femtosecond laser pulses in said train are transmitted into the atmosphere along substantially the same path, the femtosecond laser pulses in said train being the only pulses transmitted along said path.

5. A lightning protection system, comprising

   - a laser pulse source configured to generate a train of femtosecond laser pulses, with a pulse frequency of at least 0.5 MHz and a train duration of at least 100 microseconds;
   - a laser amplifier configured to amplify the pulses from the train each to an energy level exceeding a threshold energy for generating a plasma filament in atmospheric air.

6. A lightning protection system according to claim 5, comprising a lightning condition sensor with an output coupled to the laser pulse source, the laser pulse source being a burst source configured to apply said train of femtosecond laser pulses to the laser amplifier only during bursts of at most one millisecond, at least part of the bursts being triggered by trigger signals from the lightning condition sensor.

7. A lightning protection system according to claim 5 or 6, wherein the laser pulse source comprises a laser oscillator, a light switch coupled between the laser oscillator and the laser amplifier and a control circuit configured to make the light switch pass selected pulses from the laser oscillator at said repetition rate.

8. A lightning protection system according to claim 6, comprising a variable light attenuator coupled between the laser pulse source and the amplifier and a control circuit configured to decrease an attenuation applied to the pulses from the laser pulse source as a function of time during the burst.

16

12

14    10

# Fig.1

16    28

26

25

29    24

22

# Fig.2    20

Europäisches
Patentamt

European
Patent Office

Office européen
des brevets

# EUROPEAN SEARCH REPORT

Application Number

EP 08 16 8766

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JÉRÔME KASPARIAN ET AL: "Electric events synchronized with laser filaments in thunderclouds" OPTICS EXPRESS, vol. 16, no. 8, 10 April 2008 (2008-04-10), pages 5757-5763, XP002520849 | 1,2,4-7 | INV. H02G13/00 |
| A | * the whole document * ----- | 3,8 | |
| Y | JIABIN ZHU ET AL: "Long lifetime plasma channel in air generated by multiple femtosecond laser pulses and an external electrical field" OPTICS EXPRESS, vol. 14, no. 11, 10 May 2006 (2006-05-10), pages 4915-4922, XP002520850 * the whole document * ----- | 1,2,4-7 | |
| D,Y | US 6 072 684 A (EYBERT-BERARD ANDRE [FR] ET AL) 6 June 2000 (2000-06-06) * the whole document * ----- | 2,6 | TECHNICAL FIELDS SEARCHED (IPC) |
| A | US 5 726 855 A (MOUROU GERARD [US] ET AL) 10 March 1998 (1998-03-10) * the whole document * ----- | 1-8 | H02G H01S |

The present search report has been drawn up for all claims

| Place of search | Date of completion of the search | Examiner |
|---|---|---|
| The Hague | 24 March 2009 | Hermann, Robert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 16 8766

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2009

| Patent document cited in search report | | Publication date | Patent family member(s) | | Publication date |
|---|---|---|---|---|---|
| US 6072684 | A | 06-06-2000 | AU | 720696 B2 | 08-06-2000 |
| | | | AU | 3546297 A | 02-02-1998 |
| | | | EP | 0909474 A1 | 21-04-1999 |
| | | | FR | 2750806 A1 | 09-01-1998 |
| | | | WO | 9801929 A1 | 15-01-1998 |
| | | | JP | 2000514948 T | 07-11-2000 |
| US 5726855 | A | 10-03-1998 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5175664 A

- US 6072684 A

**Non-patent literature cited in the description**

- **A. Couairon et al.** Femtosecond filamentation in transparent media. *Physics Reports,* 2007, vol. 441, 47-189
- **M. Rodriguez et al.** Triggering and guiding of megavolt discharges using laser-induced ionized filaments. *Optics Letters,* 2002, vol. 27, 772-774
- **G. Mejean et al.** Improved laser triggering and guiding of megavolt discharges with dual fs-ns pulses. *Applied Physics Letters,* 2006, vol. 88, 021101

- **R. Ackermann et al.** Triggering and guiding of megavolt discharges by laser-induced filaments under rain conditions. *Applied Physics Letters,* 2004, vol. 85, 5781-5783
- **J. Kasparian.** Filaments of Light. *American Scientist,* 2006, vol. 94, 150